# EUROPEAN PATENT APPLICATION

(11) **EP 1 691 249 A1**
(43) Date of publication of application: **16.08.2006**
(21) Application number: 04819356.9
(22) Date of filing: 24.11.2004
(51) Int. Cl.: G06F 1/00

(54) **SECRET INFORMATION PROCESSING SYSTEM AND LSI**

(30) Priority: 28.11.2003 JP 2003398370
(71) Applicant: MATSUSHITA ELECTRIC INDUSTRIAL CO., LTD., Kadoma-shi, Osaka 571-8501 (JP)
(72) Inventor: TORISAKI, Yuishi c/o Matsushita El. Ind. Co., Ltd., Osaka-shi, Osaka 540-6319 (JP); FUJIWARA, Makoto c/o Matsushita El. Ind. Co., Ltd., Osaka-shi, Osaka 540-6319 (JP); NEMOTO, Yusuke c/o Matsushita El. Ind. Co., Ltd., Osaka-shi, Osaka 540-6319 (JP)
(74) Representative: TBK-Patent
(86) International application number: PCT/JP2004/017389
(87) International publication number: WO 2005/052768

(57) **Abstract**

[Challenge] In a system which processes secret information, use of a secret information processing LSI due to unauthorized tampering of software, spoofing or the like is prevented and data on a bus are protected against analysis using a probe, etc. [Solution] Within the secret information processing LSI, software which controls an LSI 1002 is subjected to tampering detection within a comparator 1008 and authentication processing within a comparator 1020, thereby confirming the validity of the software and preventing use of the secret information processing LSI by unauthorized software. The LSI and the software share session keys 1035 and 1038 which are based on a random number used for authentication processing and encrypted communications are attained using the session keys, which protects data on a bus.

## Description

### [Technical Field of the Invention]

The present invention relates to a secret information processing system and an LSI which prevents, by means of an encoding technique, leakage of secret information.

### [Prior Art]

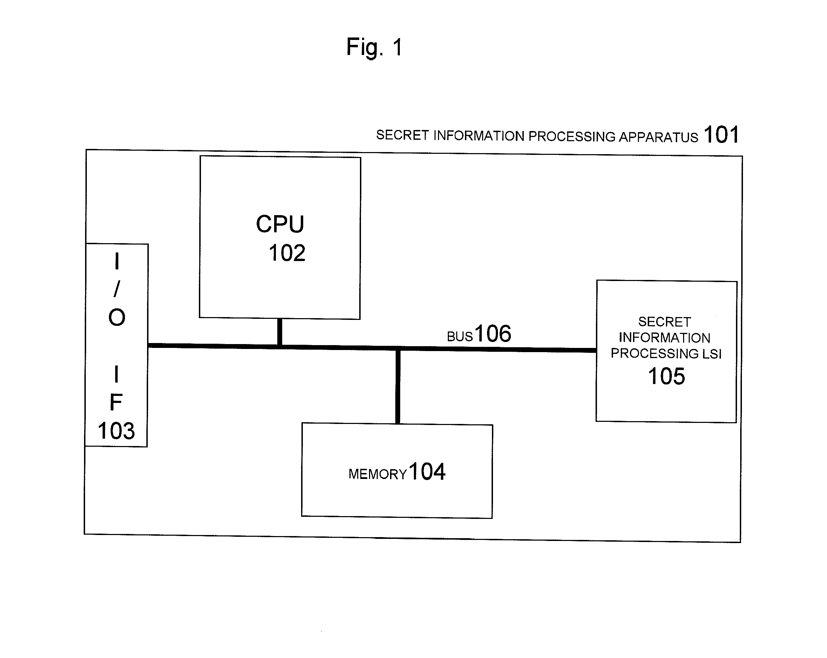

Fig. 1 shows an example of the structure of a secret information processing apparatus. A secret information processing apparatus 101 is a secret information processing system which comprises a CPU 102, an I/O interface 103, a memory 104, a secret information processing LSI 105 and a bus 106 which connects these. To be addressed principally in such a secret information processing system for prevention of leakage of secret information are the three problems of leakage of secret information owing to tampering of software, spoofing or the like, leakage of secret information resulting from an unauthorized access to the secret information processing LSI 105, and leakage of secret information committed by observing the bus 106 between the secret information processing LSI 105 and the CPU 102.

Known as a conventional apparatus which prevents leakage of secret information owing to tampering of software, spoofing or the like is an apparatus in which the secret information processing LSI 105 performs tampering detection of a part of software which is being run by the CPU 102 at the time of execution of secret information processing and when detecting tampering, informs the CPU 102 of the detection of tampering so that leakage of secret information owing to unauthorized execution of the software will be prevented (See Patent Literature 1.).

Meanwhile, the technique called TRS is also known which requires execution of anti-tampering processing of software to thereby prevent leakage of secret information owing to tampering of the software. This is a technique which implements a special method, such as encoding/decoding and insertion of a dummy code, at the time of installation of software to thereby make deciphering or tampering of the software difficult.

Next, as means which prevents leakage of secret information because of unauthorized access to the secret information processing LSI 105, such a secret information processing LSI 105 is known which uses registers which can not be accessed from outside as registers for storing secret information (which may be a coding key for instance) which is needed for processing of secret information.

Further, as means which prevents leakage of secret information committed by observing the bus 106 between the secret information processing LSI 105 and the CPU 102, such a secret information processing apparatus is known which establishes encrypted communications between the secret information processing LSI 105 and the CPU 102 using a fixed key.
[Patent Literature 1] Japanese Patent Application Laid-Open Gazette No. H11-39156

### [Disclosure of the Invention]

### [Problems to be Solved by the Invention]

However, the conventional techniques have the following problems.

In an apparatus in which the secret information processing LSI 105 performs tampering detection of a part of software which is being run by the CPU 102 at the time of execution of secret information processing and when detecting tampering, informs the CPU 102 of the detection of tampering so that leakage of secret information owing to unauthorized software execution will be prevented (See Patent Literature 1.), the secret information processing LSI 105, upon detection of undue tampering of software, merely informs the CPU 102 of the detection of tampering and it is the CPU 102 that determines error processing to follow, and hence, there is a problem that one can attempt re-tampering and an attack.

Meanwhile, a method which requires encrypted communications between a secret information processing LSI and a CPU using a fixed key has a problem that use of the fixed key, i.e., a constant value, as a code key allows one to estimate the key during observation over a long period and one would be able to decipher encrypted communications.

In light of these problems, the present invention aims at ensuring, as a secret information processing system, prevention of use of a secret information processing LSI owing to unauthorized software execution.

The present invention also aims at providing protection of communications of secret information between a secret information processing LSI and a CPU.

### [Means to Solve the Problem]

The secret information processing system according to the present invention comprises: a memory which stores software; a CPU which reads and executes the software from the memory; and an LSI which comprises at least one of a tampering detection circuit, which detects tampering of the software, and an authentication processing circuit, which authenticates the software, and a circuit which processes secret information under the control of the software,
characterized in that the LSI performs, utilizing the tampering detection circuit or the authentication processing circuit, at least one processing of tampering detection and authentication for the software, and determines the operation of the LSI based on the result of the processing.

In the structure above, when tampering is detected as a result of tampering detection or in the case of failed authentication as a result of authentication processing, a secret information input/output terminal inside the LSI stops operating.

In the structure above, when tampering is not detected as a result of tampering detection or in the case of successful authentication as a result of authentication processing, the secret information input/output terminal inside the LSI starts operating.

In the structure above, when tampering is detected as a result of tampering detection or in the case of failed authentication as a result of authentication processing, the circuit which processes secret information within the LSI stops operating.

In the structure above, when tampering is not detected as a result of tampering detection or in the case of successful authentication as a result of authentication processing, the circuit which processes secret information within the LSI starts operating.

In the structure above, the software has a first coded hash value which is obtained by calculating a hash value in advance before installation and encoding the result of the calculation, and
the tampering detection circuit comprises a first decoding circuit which decodes the first coded hash value using a first decoding key, a hash creating circuit which creates a first hash value of the software prior to execution of the software, and a first comparator which detects tampering of the software by means of comparison of the first hash value and a value which is obtained as the first decoding circuit decodes the first coded hash value.

In the structure above, the software concatenates a first constant at a predetermined position and is encoded using a software coding key before installation, and
the tampering detection circuit has a second constant and comprises a software decoding circuit which decodes the software using a software decoding key and extracts a first comparison value from the predetermined position, and a second comparator which detects tampering of the software by comparing the first comparison value with the second constant.

In the structure above, the authentication processing circuit comprises a first random number generating circuit which generates a first random number, a first circuit which performs first one-way function processing of the first random number using a first common key, and a third comparator,
the software has a first function of performing the first one-way function processing of the first random number using a common key, and
the third comparator authenticates the software by comparing a second comparison value which is obtained as the authentication processing circuit performs the first one-way function processing with a third comparison value which is obtained as the software performs the first one-way function processing of the first random number fed from the authentication processing circuit.

In the structure above, the authentication processing circuit comprises a second circuit which performs second one-way function processing using a second common key, and a fourth comparator,
the software has a second function of performing the second one-way function processing using a common key, and a first random number generating function of generating a second random number, and
the fourth comparator authenticates the software by comparing a fourth comparison value, which is obtained as the software performs the second one-way function processing of the second random number generated by the first random number generating function, with a fifth comparison value which is obtained as the second circuit of the authentication processing circuit performs the second one-way function processing of the second random number fed from the software.

In the structure above, the authentication processing circuit comprises a second random number generating circuit, a third circuit which performs third one-way function processing using a third common key and a fifth comparator, and the second random number generating circuit generates a third random number,
the software has a third function of performing the third one-way function processing using a common key, a second random number generating function and a first comparing function of comparing two input values, and the second random number generating function generates a fourth random number,
the fifth comparator compares a sixth comparison value, which is the result of the third one-way function processing performed on the third random number by the third circuit of the authentication processing circuit, with a seventh comparison value which is the result of the third one-way function processing performed on the third random number by the third function of the software, and
the first comparing function compares an eighth comparison value, which is obtained as the software performs the third one-way function processing of the fourth random number, with a ninth comparison value which is obtained as a result of the third one-way function processing of the fourth random number performed by the third circuit of the authentication processing circuit, whereby the LSI and the software authenticate each other.

In the structure above, first session keys common to the LSI and the software are generated based on a random number in the event of no detection of tampering and no failed authentication, and encrypted communications are achieved using the first session keys.

In the structure above, a first counter is disposed which counts the number of communications during encrypted communications using the first session keys, a first random number re-issue signal generator circuit is disposed which generates a first random number re-issue signal which prompts generation of a new random number for every certain communications, and the first session keys can thus be updated.

The structure above comprises a reset signal generator circuit which generates a first session key reset signal at the same time that the first random number re-issue signal is generated for every certain communications, to thereby reset the first session keys held by the LSI and the software respectively to different values.

The structure above comprises a circuit which generates a communication circuit stop signal, which stops the operation of the secret information input/output terminal inside the LSI, at the same time that the first random number re-issue signal is generated for every certain communications.

In the structure above, the software has a first coded hash value which is obtained by calculating a hash value in advance before installation and encoding the result of the calculation,
the tampering detection circuit comprises a first decoding circuit which decodes the first coded hash value using a first decoding key, a hash creating circuit which creates a first hash value of the software prior to execution of the software, and a first comparator which detects tampering of the software by means of comparison of the first hash value and a value which is obtained as the first decoding circuit decodes the first coded hash value, and a circuit which is started and stopped operating in accordance with the result of this is the authentication processing circuit,
the authentication processing circuit comprises a second random number generating circuit, a third circuit which performs third one-way function processing using a third common key and a fifth comparator, and the second random number generating circuit generates a third random number,
in which case the software has a third function of performing the third one-way function processing using a common key, a second random number generating function and a first comparing function of comparing two input values, and the second random number generating function generates a fourth random number,
the fifth comparator compares a sixth comparison value, which is the result of the third one-way function processing performed on the third random number by the third circuit of the authentication processing circuit, with a seventh comparison value which is the result of the third one-way function processing performed on the third random number by means of the third function of the software, and
the first comparing function compares an eighth comparison value, which is obtained as the software performs the third one-way function processing of the fourth random number, with a ninth comparison value which is obtained as a result of the third one-way function processing of the fourth random number performed by the third circuit of the authentication processing circuit, whereby the LSI and the software authenticate each other, and a circuit which is started and stopped operating in accordance with the result of this authentication processing is a circuit which attains encrypted communications,
the circuit which attains encrypted communications generates first session keys common to the LSI and the software based on a random number in the event of no detection of tampering and no failed authentication, and achieves encrypted communications using the first session keys,
a first counter is disposed which counts the number of communications during encrypted communications and a first random number re-issue signal generator circuit is disposed which generates a first random number re-issue signal which prompts generation of a new random number for every certain communications, which makes it possible to update the first session keys, and
a reset signal generator circuit is disposed which generates a first session key reset signal at the same time that the first random number re-issue signal is generated for every certain communications, to thereby reset the first session keys held by the LSI and the software respectively to different values.

The LSI according to the present invention comprises: at least one of a tampering detection circuit and an authentication processing circuit; and a circuit which processes secret information under the control of software which is executed by a CPU, characterized in that the LSI makes the tampering detection circuit or the authentication processing circuit perform at least one of tampering detection and authentication of the software and accordingly determines to operate or not to operate based on the result of this.

In the structure above, a secret information input/output terminal is disposed, and when tampering is detected as a result of tampering detection or in the case of failed authentication as a result of authentication processing, the secret information input/output terminal stops operating.

In the structure above, a secret information input/output terminal is disposed, and when tampering is not detected as a result of tampering detection or in the case of successful authentication as a result of authentication processing, the secret information input/output terminal starts operating.

In the structure above, when tampering is detected as a result of tampering detection or in the case of failed authentication as a result of authentication processing, the circuit which processes secret information stops operating.

In the structure above, when tampering is not detected as a result of tampering detection or in the case of successful authentication as a result of authentication processing, the circuit which processes secret information starts operating.

In the structure above, the software has a first coded hash value which is obtained by calculating a hash value in advance before installation and encoding the result of the calculation, and
the tampering detection circuit comprises a first decoding circuit which decodes the first coded hash value using a first decoding key, a hash creating circuit which creates a first hash value of the software prior to execution of the software, and a first comparator which detects tampering of the software by means of comparison of the first hash value and a value which is obtained as the first decoding circuit decodes the first coded hash value.

In the structure above, the software concatenates a first constant at a predetermined position and is encoded using a software coding key before installation, and
the tampering detection circuit has a second constant and comprises a software decoding circuit which decodes the software using a software decoding key and extracts a first comparison value from the predetermined position, and a second comparator which detects tampering of the software by comparing the first comparison value with the second constant.

In the structure above, the authentication processing circuit comprises a first random number generating circuit which generates a first random number, a first circuit which performs first one-way function processing of the first random number using a first common key, and a third comparator,
the software has a first function of performing the first one-way function processing of the first random number using a common key, and
the third comparator authenticates the software by comparing a second comparison value which is obtained as the authentication processing circuit performs the first one-way function processing with a third comparison value which is obtained as the software performs the first one-way function processing of the first random number fed from the authentication processing circuit.

In the structure above, the authentication processing circuit comprises a second circuit which performs second one-way function processing using a second common key, and a fourth comparator,
the software has a second function of performing the second one-way function processing using a common key, and a first random number generating function of generating a second random number, and
the fourth comparator authenticates the software by comparing a fourth comparison value, which is obtained as the software performs the second one-way function processing of the second random number generated by the first random number generating function, with a fifth comparison value which is obtained as the second circuit of the authentication processing circuit performs the second one-way function processing of the second random number fed from the software.

In the structure above, the authentication processing circuit comprises a second random number generating circuit, a third circuit which performs third one-way function processing using a third common key and a fifth comparator, and the second random number generating circuit generates a third random number,
the software has a third function of performing the third one-way function processing using a common key, a second random number generating function and a first comparing function of comparing two input values, and the second random number generating function generates a fourth random number,
the fifth comparator compares a sixth comparison value, which is the result of the third one-way function processing performed on the third random number by the third circuit of the authentication processing circuit, with a seventh comparison value which is the result of the third one-way function processing performed on the third random number by the third function of the software, and
the first comparing function compares an eighth comparison value, which is obtained as the software performs the third one-way function processing of the fourth random number, with a ninth comparison value which is obtained as a result of the third one-way function processing of the fourth random number performed by the third circuit of the authentication processing circuit, whereby mutual authentication with the software is attained.

In the structure above, first session keys common for the software are generated based on a random number in the event of no detection of tampering and no failed authentication, and encrypted communications are achieved using the first session keys.

In the structure above, a first counter is disposed which counts the number of communications during encrypted communications using the first session keys, a first random number re-issue signal generator circuit is disposed which generates a first random number re-issue signal which prompts generation of a new random number for every certain communications, and the first session keys can thus be updated.

The structure above comprises a reset signal generator circuit which generates a first session key reset signal at the same time that the first random number re-issue signal is generated for every certain communications, to thereby reset the first session keys held by the LSI and the software respectively to different values.

The structure above comprises a circuit which generates a communication circuit stop signal, which stops the operation of the secret information input/output terminal inside the LSI, at the same time that the first random number re-issue signal is generated for every certain communications.

In the structure above, the software has a first coded hash value which is obtained by calculating a hash value in advance before installation and encoding the result of the calculation,
the tampering detection circuit comprises a first decoding circuit which decodes the first coded hash value using a first decoding key, a hash creating circuit which creates a first hash value of the software prior to execution of the software, and a first comparator which detects tampering of the software by means of comparison of the first hash value with a value which is obtained as the first decoding circuit decodes the first coded hash value, and a circuit which is started and stopped operating in accordance with the result of this is the authentication processing circuit,
the authentication processing circuit comprises a second random number generating circuit, a third circuit which performs third one-way function processing using a third common key and a fifth comparator, and the second random number generating circuit generates a third random number,
in which case the software has a third function of performing the third one-way function processing using a common key, a second random number generating function and a first comparing function of comparing two input values, and the second random number generating function generates a fourth random number,
the fifth comparator compares a sixth comparison value, which is the result of the third one-way function processing performed on the third random number by the third circuit of the authentication processing circuit, with a seventh comparison value which is the result of the third one-way function processing performed on the third random number by means of the third function of the software, and
the first comparing function compares an eighth comparison value, which is obtained as the software performs the third one-way function processing of the fourth random number, with a ninth comparison value which is obtained as a result of the third one-way function processing of the fourth random number performed by the third circuit of the authentication processing circuit, whereby the LSI and the software authenticate each other, and a circuit which is started and stopped operating in accordance with the result of this authentication processing is a circuit which attains encrypted communications,
the circuit which attains encrypted communications generates first session keys common to the LSI and the software based on a random number in the event of no detection of tampering and no failed authentication, and achieves encrypted communications using the first session keys,
a first counter is disposed which counts the number of communications during encrypted communications and a first random number re-issue signal generator circuit is disposed which generates a first random number re-issue signal which prompts generation of a new random number for every certain communications, which makes it possible to update the first session keys, and
a reset signal generator circuit is disposed which generates a first session key reset signal at the same time that the first random number re-issue signal is generated for every certain communications, to thereby reset the first session keys held by the LSI and the software respectively to different values.

### [Effect of the Invention]

Where the secret information processing system according to the present invention is used, when tampering, spoofing or the like of software is found from the result of tampering detection performed by the tampering detection circuit within the LSI or from the result of authentication processing performed by the authentication processing circuit, the circuit inside the LSI stops operating, and when it is found that the software is authorized software which has not been tampered, the circuit inside the LSI starts operating.

Hence, when the software is unauthorized software, the LSI can not operate, which makes it possible to prevent the unauthorized software from using the secret information processing LSI.

Further, when the software is unauthorized software, the LSI can not be controlled, which makes it possible to prevent execution of the unauthorized software from leaking secret information, and to protect secret information on the bus for establishment of encrypted communications using the first session keys. Since the first session keys are based on a random number, the key values are changed unlike during an encrypted communication using a fixed key, and therefore, it is difficult to estimate the keys even through observation of the bus using a probe and it is hence possible to prevent leakage of secret information, and even if the keys should be estimated, since the keys are changed for every authentication, leakage of secret information is minimized.

In addition, as the first session keys are updated for every certain communications, it is possible to update the keys at a frequency which corresponds to the demanded level of security.

### [Brief Description of the Drawings]

[Fig. 1] Fig. 1 is a drawing which shows the structure of a secret information processing apparatus.
[Fig. 2] Fig. 2 is a drawing which shows the major structure of a secret information processing LSI which is used in the present invention.
[Fig. 3] Fig. 3 is a flow chart of the operation of the secret information processing LSI which is used in the present invention.
[Fig. 4] Fig. 4 is a drawing which shows the steps of deriving a coded hash value of secret information processing software which is used in a first embodiment, a second embodiment and a third embodiment of the present invention.
[Fig. 5] Fig. 5 is a drawing which shows the configuration of the secret information processing software and the content of a memory which are used in the first embodiment, the second embodiment and the third embodiment of the present invention. [Fig. 6] Fig. 6 is a drawing which shows the operation of a secret information processing system and the structure of a secret information processing LSI according to the first embodiment of the present invention.
[Fig. 7] Fig. 7 is a drawing which shows the operation of a secret information processing system and the structure of a secret information processing LSI according to the second embodiment of the present invention.
[Fig. 8] Fig. 8 is a drawing which shows the operation of a secret information processing system and the structure of a secret information processing LSI according to the third embodiment of the present invention.
[Fig. 9] Fig. 9 is a drawing which shows the configuration of secret information processing software and the content of a memory which are used in a fourth embodiment of the present invention.
[Fig. 10] Fig. 10 is a drawing which shows the operation of a secret information processing system and the structure of a secret information processing LSI according to the fourth embodiment of the present invention.

### [The Best Mode of Implementing the Invention]

Embodiments of the present invention will now be described with reference to the associated drawings.

Fig. 1 shows the structure of a secret information processing apparatus 101 which is common across the embodiments of the present invention.
While this embodiment is directed to a structure that these are individually disposed to the secret information processing apparatus, some or all of these may be incorporated in one LSI. In the apparatus 101 shown in Fig. 1, the CPU 102 reads from the memory 104 software which executes secret information processing using the secret information processing LSI 105. The software can process secret information using the secret information processing LSI 105 when no tampering has been detected and authentication has accordingly succeeded during tampering detection and authentication processing performed by the secret information processing LSI 105.

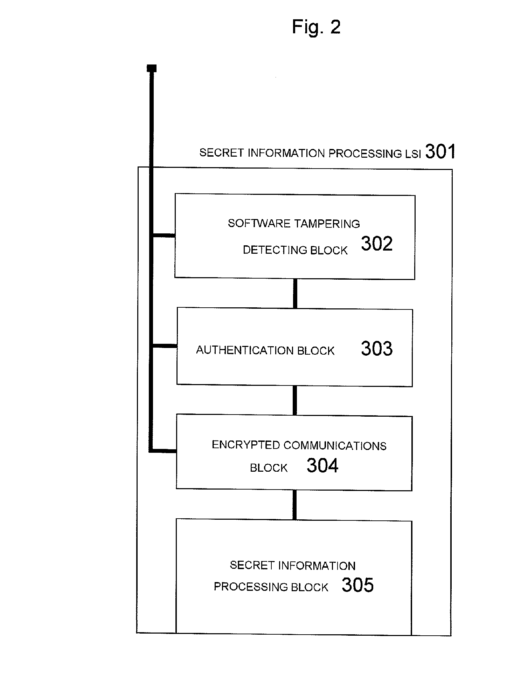

As shown in Fig. 2, a secret information processing LSI 301 contains four blocks. A software tampering detecting block 302 is formed by a circuit which is associated with tampering detection of software, an authentication block 303 is formed by a circuit which is associated with authentication processing of software, an encrypted communications block 304 is formed by a circuit which is associated with encrypted communications, and a secret information processing block 305 is formed by a circuit which is associated with secret information processing. Examples of the detailed structures of the respective blocks will be described later in relation to the first through the fourth embodiments.

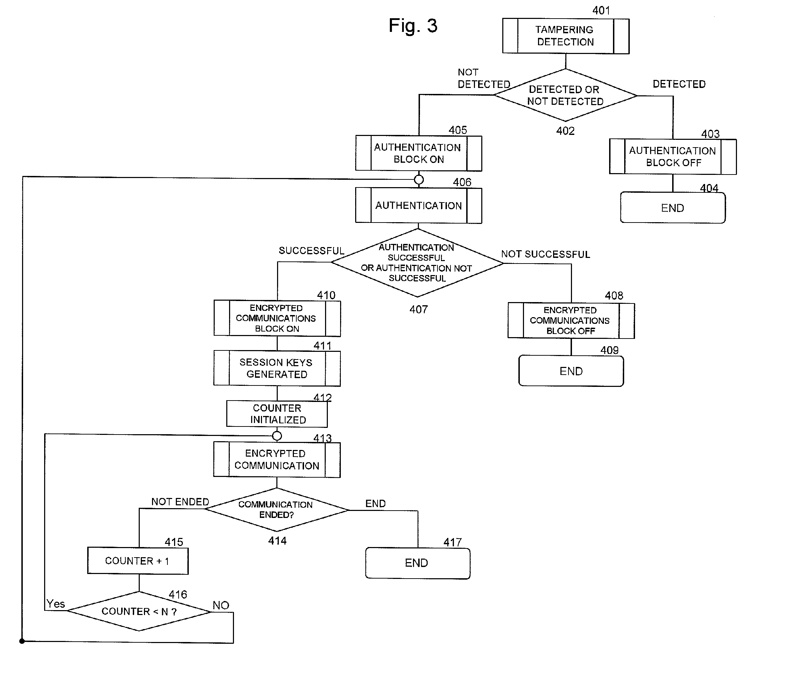

Fig. 3 is a flow chart of the operation of the secret information processing LSI 105 commonly used in the respective embodiments. When secret information processing software commences processing of secret information using the secret information processing LSI 105, first, the software tampering detecting block 302 of the secret information processing LSI 105 performs tampering detection of the secret information processing software (Step 401). When tampering is detected as a result of this (Step 402), the authentication block stops operating (Step 403) and the processing is accordingly terminated (Step 404). In the event that no tampering is detected, the authentication block 303 starts operating (Step 405).

The authentication block 303 then performs authentication processing (Step 406), and when the authentication ends up in a failure as a result of this (Step 407), the encrypted communications block 304 stops operating (Step 408) and the processing is terminated (Step 409). In the event of successful authentication, the encrypted communications block 304 starts operating (Step 410).

In the encrypted communications block 304, both the secret information processing LSI 105 and the secret information processing software generate session keys (Step 411), and after initialization of a counter which records the number of communications (Step 412), an encrypted communication using the session keys is started (Step 413). While the communication is ongoing (Step 414), the count registered in the counter increases for every communication (Step 415), and when the counter reaches a predetermined value (Step 416), authentication processing is performed once again and the session keys are updated, whereby encrypted communications are attained while updating the keys at an appropriate frequency and the processing ends as all communications finish (Step 417).

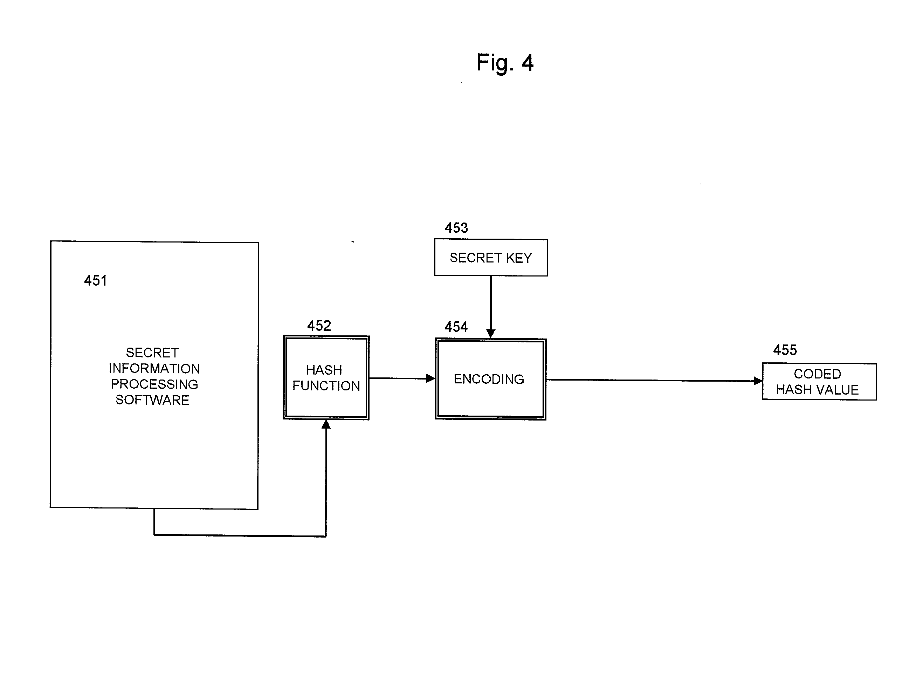

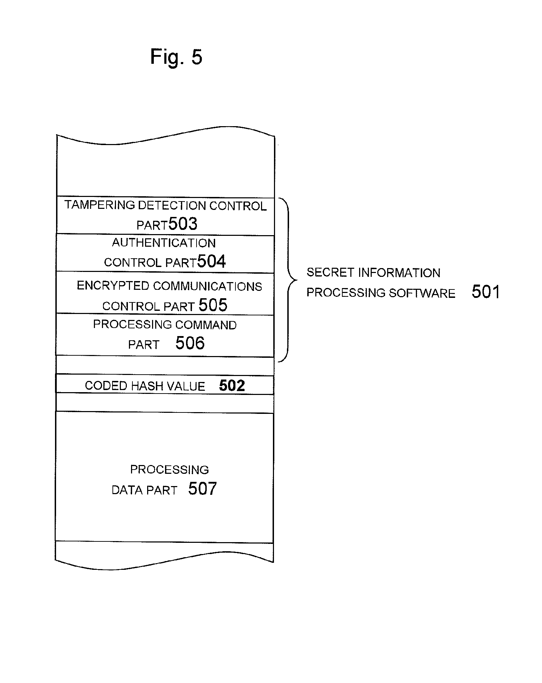

This is a common operation of the secret information processing LSI across the respective embodiments. The first, the second, the third and the fourth embodiments will now be described in detail with reference to the associated drawings.
(First Embodiment)
The structure according to the first embodiment is as shown in Fig. 1. Stored in the memory 104 are secret information processing software 501, which executes processing of secret information using the secret information processing LSI 105 as shown in Fig. 5, and a coded hash value 455 (502) which is obtained by calculating a hash value (452) of the secret information processing software 451 (501) at the time of installation as shown in Fig. 4 and by encoding (454) this result using a secret key 453. The secret information processing software 501 includes a tampering detection control part 503, an authentication control part 504, an encrypted communications control part 505 and a processing command part 506.

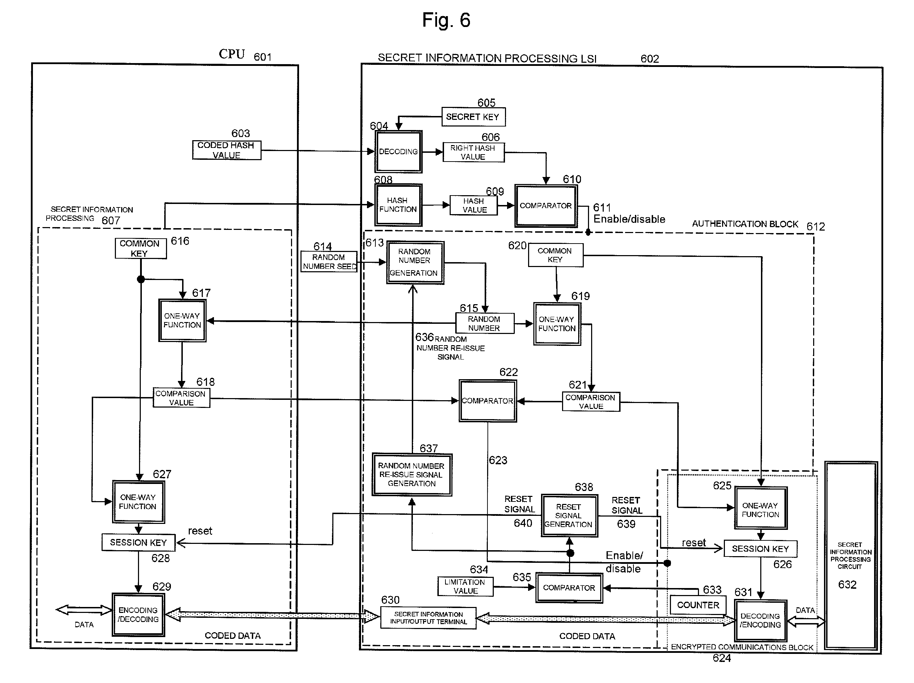

Fig. 6 shows the operation of a CPU 601, which reads and executes the secret information processing software 501, and the structure and operation of a secret information processing LSI 602: Execution of the secret information processing software 501 realizes secret information processing 607.

At the time of execution of the secret information processing software 501, the CPU 601 reads and executes the tampering detection control part 503 from the memory 104. The CPU 601, executing the tampering detection control part 503, reads the coded hash value 502 (603) which is in the memory 104 and feeds this to the secret information processing LSI 602, first. Within a decoding circuit 604 of the secret information processing LSI 602, thus fed coded hash value 603 is decoded with the use of a secret key 605 stored inside the secret information processing LSI 602 and accordingly becomes a right hash value 606.

Meanwhile, the CPU 601 supplies the tampering detection control part 503, the authentication control part 504, the encrypted communications control part 505 and the processing command part 506 which are in the memory 104 one after another to the secret information processing LSI 602. The secret information processing LSI 602 calculates, within a hash function circuit 608, a hash value 609 from these inputs.

Once the hash value 609 is obtained in the secret information processing LSI 602, a comparator 610 compares the value of the right hash value 606 with that of the hash value 609, thereby detecting tampering of the secret information processing software 501. A match between the two values means no detection of tampering, which enables an enable/disable signal 611 and makes the secret information processing LSI 602 start the operation of an authentication block 612 which is contained in the secret information processing LSI 602. A difference between the two values means detection of tampering, which disables the enable/disable signal 611 and makes the secret information processing LSI 602 stop the operation of the authentication block 612.

Once the operation of the authentication block 612 starts, a random number generating circuit 613 receives a random number seed 614, which is based on a noise outside the secret information processing LSI 602, and generates a random number 615. Thus generated random number 615 is output to the CPU 601. Reading the authentication control part 504 of the secret information processing software 501 from the memory 104 and using a common key 616 incorporated in the authentication control part 504, the CPU 601 performs one-way function processing 617 of the random number 615 and supplies the result of this as a comparison value 618 to the secret information processing LSI 602.

In the secret information processing LSI 602, a circuit 619 for one-way function processing performs one-way function processing of the random number 615 using a common key 620 stored in the secret information processing LSI 602, and supplies the result of this as a comparison value 621 to a comparator 622.

The comparator 622 compares a comparison value 618 fed from the CPU 601 with the comparison value 621, thereby performing authentication processing. A match between the two values means authentication of the secret information processing software 501 by the secret information processing LSI 602, which enables an enable/disable signal 623 and makes the secret information processing LSI 602 start the operation of an encrypted communications block 624 which is contained in the secret information processing LSI 602. A difference between the two values means failed authentication, which disables the enable/disable signal 623 and makes the secret information processing LSI 602 stop the operation of the encrypted communications block 624.

Once the operation of the encrypted communications block 624 starts, a circuit 625 for one-way function processing performs one-way function processing of the comparison value 621 using the common key 620, and the result of this is determined a session key 626. Meanwhile, the CPU 601 reads the encrypted communications control part 505 of the secret information processing software 501 from the memory 104 and performs the one-way function processing 627 of the comparison value 618 using the common key 616, and the result of this is determined a session key 628. Since authentication is successful as long as the encrypted communications block 624 is operating, the session key 626 and the session key 628 are same values.

Commands of the processing command part 506 and processing data 507 in the memory 104 are read into the CPU 601 one after another, and after encoding 629 which uses the session key 628, fed to the secret information processing LSI 602. Within the secret information processing LSI 602, coded commands and coded data received at a secret information input/output terminal 630 are decoded by a encoding/decoding circuit 631 using the session key 626 and thus decoded commands and data are supplied to a secret information processing circuit 632 which is inside the secret information processing LSI 602, whereby secret information is processed.

Alternatively, output data from the secret information processing circuit 632 are encoded by the encoding/decoding circuit 631 using the session key 626 and output to the CPU 601 through the secret information input/output terminal 630, and the CPU 601 executes decoding 629 using the session key 628 and accordingly realizes processing of secret information.

During such encrypted communications, a counter 633 disposed to the secret information processing LSI 602 counts the number of the communications. A comparator 635 compares the count registered in the counter 633 with a limitation value 634 stored in the secret information processing LSI 602, and when the two values match with each other, a random number re-issue signal generator circuit 637 generates a random number re-issue signal 636 and a reset signal generator circuit 638 generates a reset signal 639 and a reset signal 640. The random number re-issue signal 636 is fed to the random number generating circuit 613, and as a result, the random number 615 is generated once again. Meanwhile, the reset signal 639 resets the session key 626 which is inside the secret information processing LSI 602. Further, the reset signal 640 is output to the CPU 601, and the CPU 601, receiving this, resets the session key 628. At this stage, the two session keys 626 and 628 are reset to different values which have been determined in advance respectively for the secret information processing software 501 and the secret information processing LSI 602, and accordingly have different values.

Following this, the CPU 601 executes the authentication control part 504 and the secret information processing LSI 602 re-executes the operation of the authentication block 612, whereby authentication processing is performed once again and the session keys 626 and 628 are updated.

While the first embodiment requires that the common key used in the one-way function processing 617 and 619 for authentication processing is the same as the common key used in the one-way function processing 627 and 625 for generation of the session keys, these may be common keys which are different from each other.

Further, the configuration of the authentication block 612 only needs be able to control the operation of the encrypted communications block 624: Some of the structure elements in the configuration of the authentication block 612 according to the first embodiment may be outside the authentication block or other structure elements may be included in the authentication block.

Further, the encrypted communications block 624 only needs be configured such that no encrypted communication using the same session key will take place unless the encrypted communications block 624 operates: Some of the structure elements in the configuration of the encrypted communications block 624 according to the first embodiment may be outside the encrypted communications block or other structure elements may be included in the encrypted communications block.

Further, although the first embodiment requires resetting the session keys 626 and 628 respectively to the predetermined values at the time of generation of the reset signals 639 and 640, these may be reset respectively to different values using other value which may be a random number for instance.

As described above, according to the first embodiment, tampering detection is performed through calculation of the hash value of the secret information processing software 501 while executing authentication processing based on the random number 615 generated by the secret information processing LSI 602, which prevents unauthorized software from using the secret information processing LSI 602. In addition, as the session keys 626 and 628 are generated based on the random number 615 which is used during the authentication processing and encrypted communications are realized between the LSI 602 and the CPU 601, communications of secret information between the secret information processing LSI 602 and the CPU 601 are protected.

Since the random number 615 to be used during authentication processing is generated inside the secret information processing LSI 602 according to the first embodiment, the random number is generated by means of hardware, and therefore, a risk of undue manipulation of the random number is low and reliability is good. This leads to improved security.

Further, since hash is utilized for tampering detection, the software to be installed need no special processing and it is thus easy to install the software. Moreover, since the session keys 626 and 628 are reset when the number of encrypted communications using the session keys 626 and 628 reaches the limitation value 634, the start and the end of the operation of the encrypted communications block 624 at the time of resetting necessitate no control and it is therefore easy to control.
(Second Embodiment)
The structure according to the second embodiment is as shown in Fig. 1. Stored in the memory 104 are secret information processing software 501, which executes processing of secret information using the secret information processing LSI 105 as shown in Fig. 5, and a coded hash value 455 (502) which is obtained by calculating a hash value (452) of the secret information processing software 451 (501) at the time of installation as shown in Fig. 4 and by encoding (454) this result using a secret key 453. The secret information processing software 501 includes a tampering detection control part 503, an authentication control part 504, an encrypted communications control part 505 and a processing command part 506.

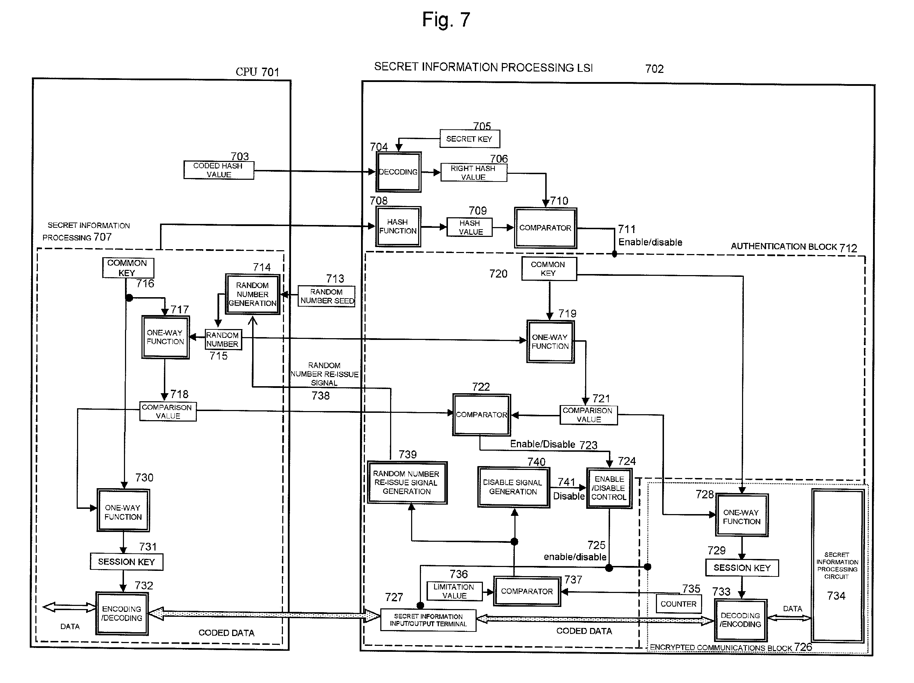

Fig. 7 shows the operation of a CPU 701, which reads and executes the secret information processing software 501, and the structure and operation of a secret information processing LSI 702: Execution of the secret information processing software 501 realizes secret information processing 707.

At the time of execution of the secret information processing software 501, the CPU 701 reads and executes the tampering detection control part 503 from the memory 104. The CPU 701, executing the tampering detection control part 503, reads the coded hash value 502 (703) which is in the memory 104 and feeds this to the secret information processing LSI 702, first. Within a decoding circuit 704 of the secret information processing LSI 702, thus fed coded hash value 703 is decoded with the use of a secret key 705 stored inside the secret information processing LSI 702 and accordingly becomes a right hash value 706.

Meanwhile, the CPU 701 supplies the tampering detection control part 503, the authentication control part 504, the encrypted communications control part 505 and the processing command part 506 which are in the memory 104 one after another to the secret information processing LSI 702. The secret information processing LSI 702 calculates, within a hash function circuit 708, a hash value 709 from these inputs.

Once the hash value 709 is obtained in the secret information processing LSI 702, a comparator 710 compares the value of the right hash value 706 with that of the hash value 709, thereby detecting tampering of the secret information processing software 501. A match between the two values means no detection of tampering, which enables the enable/disable signal 711 and makes the secret information processing LSI 702 start the operation of an authentication block 712 which is contained in the secret information processing LSI 702. A difference between the two values means detection of tampering, which disables the enable/disable signal 711 and makes the secret information processing LSI 702 stop the operation of the authentication block 712.

Finishing execution of the tampering detection control part 503, the CPU 701 reads and executes the authentication control part 504 from the memory 104. In the authentication control part 504, random number generation 714 is performed based on a random number seed 713 which is based on a noise in the secret information processing apparatus 101, thereby generating a random number 715. The CPU 701 performs one-way function processing 717 of the random number 715 using a common key 716 which is incorporated in the authentication control part 504, and outputs the result of this to the secret information processing LSI 702 as a comparison value 718.

Meanwhile, the random number 715 is fed to the secret information processing LSI 702 from the CPU 701, a circuit 719 for one-way function processing performs one-way function processing of the random number 715 using a common key 720 stored in the secret information processing LSI 702, and the result of this is fed to a comparator 722 as a comparison value 721.

The comparator 722 compares the comparison value 718 fed from the CPU 701 with the comparison value 721, thereby performing authentication processing. A match between the two values means authentication of the secret information processing software 501 by the secret information processing LSI 702, which enables an enable/disable signal 723, makes an enable/disable control circuit 724 enable an enable/disable signal 725 and makes the secret information processing LSI 702 start the operations of an encrypted communications block 726 and a secret information input/output terminal 727 which are inside the secret information processing LSI702. A difference between the two values means failed authentication, which disables the enable/disable signal 723, makes the enable/disable control circuit 724 disable the enable/disable signal 725 and makes the secret information processing LSI 702 stop the operations of the encrypted communications block 726 and the secret information input/output terminal 727.

Once the operation of the encrypted communications block 726 starts, a circuit 728 for one-way function processing performs one-way function processing of the comparison value 721 using the common key 720, and the result of this is determined to be a session key 729. Meanwhile, the CPU 701 reads the encrypted communications control part 505 of the secret information processing software 501 from the memory 104 and performs one-way function processing 730 of the comparison value 718 using the common key 716, and the result of this is determined to be a session key 731. Since authentication is successful as long as the encrypted communications block 726 is operating, the session key 729 and the session key 731 are same values.

Commands of the processing command part 506 and processing data 507 in the memory 104 are read into the CPU 701 one after another, and after encoding 732 which uses the session key 731, fed to the secret information processing LSI 702. Within the secret information processing LSI 702, coded commands and coded data received at a secret information input/output terminal 727 are decoded by a encoding/decoding circuit 733 using the session key 729 and thus decoded commands and data are supplied to a secret information processing circuit 734 which is inside the secret information processing LSI 702, whereby secret information is processed.

Alternatively, output data from the secret information processing circuit 734 are encoded by the encoding/decoding circuit 733 using the session key 729 and output to the CPU 701 through the secret information input/output terminal 727, and the CPU 701 performs decoding 732 using the session key 731 and accordingly realizes processing of secret information.

During such encrypted communications, a counter 735 disposed to the secret information processing LSI 702 counts the number of the communications. A comparator 737 compares the value registered in the counter 735 with a limitation value 736 stored in the secret information processing LSI 702, and when the two values match with each other, a random number re-issue signal generator circuit 739 generates a random number re-issue signal 738. Meanwhile, a disable signal generator circuit 740 generates a disable signal 741 and an enable/disable control circuit 724 disables an enable/disable signal 725, so that the operations of the encrypted communications block 726 and the secret information input/output terminal 727 are stopped.

Following this, the CPU 701 executes the authentication control part 504 and the secret information processing LSI 702 re-executes the operation of the authentication block 712, whereby authentication processing is performed once again and the session keys 729 and 731 are updated.

While the second embodiment requires that the common key used in the one-way function processing 717 and 719 for authentication processing is the same as the common key used in the one-way function processing 730 and 728 for generation of the session keys, these may be common keys which are different from each other.

Further, the configuration of the authentication block 712 only needs be able to control the operation of the encrypted communications block 726: Some of the structure elements in the configuration of the authentication block 712 according to the second embodiment may be outside the authentication block or other structure elements may be included in the authentication block.

Further, the encrypted communications block 726 only needs be configured such that no encrypted communication using the same session key will take place unless the encrypted communications block 726 operates: Some of the structure elements in the configuration of the encrypted communications block 726 according to the second embodiment may be outside the encrypted communications block or other structure elements may be included in the encrypted communications block.

As described above, according to the second embodiment, tampering detection is performed through calculation of the hash value of the secret information processing software 501 while executing authentication processing based on the random number 715 generated by the secret information processing software 501, which prevents unauthorized software from using the secret information processing LSI 702. In addition, as the session keys (729, 731) are generated based on the random number 715 which is used during the authentication processing and encrypted communications are realized between the LSI 702 and the CPU 701, communications of secret information between the secret information processing LSI 702 and the CPU 701 are protected.

Since the second embodiment requires generation of the random number 715 by the secret information processing software 501, it is easy to mount the secret information processing LSI while reducing the surface area size.

Further, since hash is utilized for tampering detection, the software to be installed need no special processing and it is thus easy to install the software. Moreover, since the operations of the encrypted communications block 726 and the secret information input/output terminal 727 are stopped when the number of encrypted communications using the session keys 731 and 729 reaches the limitation value 736, no erroneous communication will take place while authentication processing is being executed once again, which ensures improved security.
(Third Embodiment)
The structure according to the third embodiment is as shown in Fig. 1. Stored in the memory 104 are secret information processing software 501, which executes processing of secret information using the secret information processing LSI 105 as shown in Fig. 5, and a coded hash value 455 (502) which is obtained by calculating a hash value (452) of the secret information processing software 451 (501) at the time of installation as shown in Fig. 4 and by encoding (454) this result using a secret key 453. The secret information processing software 501 includes a tampering detection control part 503, an authentication control part 504, an encrypted communications control part 505 and a processing command part 506.

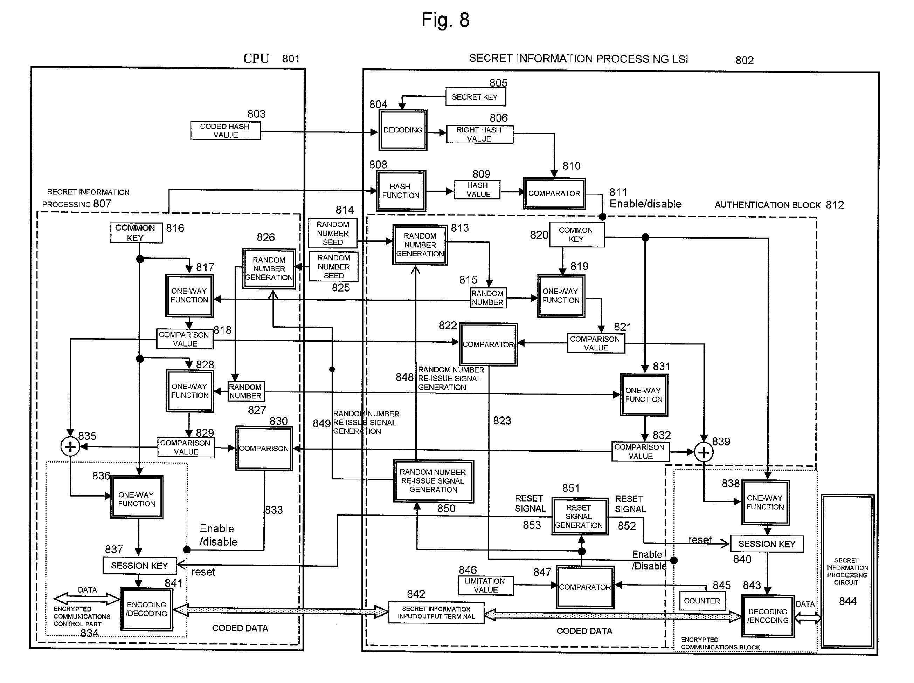

Fig. 8 shows the operation of a CPU 801, which reads and executes the secret information processing software 501, and the structure and operation of a secret information processing LSI 802: Execution of the secret information processing software 501 realizes secret information processing 807.

At the time of execution of the secret information processing software 501, the CPU 801 reads and executes the tampering detection control part 503 from the memory 104. The CPU 801, executing the tampering detection control part 503, reads the coded hash value 502 (803) which is in the memory 104 and feeds this to the secret information processing LSI 802, first. Within a decoding circuit 804 of the secret information processing LSI 802, thus fed coded hash value 803 is decoded using a secret key 805 stored inside the secret information processing LSI 802 and accordingly becomes a right hash value 806.

Meanwhile, the CPU 801 supplies the tampering detection control part 503, the authentication control part 504, the encrypted communications control part 505 and the processing command part 506 which are in the memory 104 one after another to the secret information processing LSI 802. The secret information processing LSI 802 calculates, within a hash function circuit 808, a hash value 809 from these inputs.

Once the hash value 809 is obtained in the secret information processing LSI 802, a comparator 810 compares the value of the right hash value 806 with that of the hash value 809, thereby detecting tampering of the secret information processing software 501. A match between the two values means no detection of tampering, which enables an enable/disable signal 811 and makes the secret information processing LSI 802 start the operation of an authentication block 812 which is contained in the secret information processing LSI 802. A difference between the two values means detection of tampering, which disables the enable/disable signal 811 and makes the secret information processing LSI 802 stop the operation of the authentication block 812.

Once the operation of the authentication block 812 starts, a random number generating circuit 813 receives a random number seed 814, which is based on a noise outside the secret information processing LSI 802, and generates a random number 815. Thus generated random number 815 is output to the CPU 801. Reading the authentication control part 504 of the secret information processing software 501 from the memory 104 and using a common key 816 incorporated in the authentication control part 504, the CPU 801 performs one-way function processing 817 of the random number 815 and supplies the result of this as a comparison value 818 to the secret information processing LSI 802.

In the secret information processing LSI 802, a circuit 819 for one-way function processing performs one-way function processing of the random number 815 using a common key 820 stored in the secret information processing LSI 802, and the result of this is fed to a comparator 822 as a comparison value 821.

The comparator 822 compares a comparison value 818 fed from the CPU 801 with the comparison value 821, thereby performing authentication processing. A match between the two values means authentication of the secret information processing software 501 by the secret information processing LSI 802, which enables an enable/disable signal 823 and makes the secret information processing LSI 802 start the operation of an encrypted communications block 824 which is contained in the secret information processing LSI 802. A difference between the two values means failed authentication, which disables the enable/disable signal 823 and makes the secret information processing LSI 802 stop the operation of the encrypted communications block 824.

Finishing execution of the tampering detection control part 503, the CPU 801 reads and executes the authentication control part 504 from the memory 104. In the authentication control part 504, random number generation 826 is performed based on a random number seed 825 which is based on a noise in the secret information processing apparatus 101, thereby generating a random number 827. The CPU 801 performs one-way function processing 828 of the random number 827 using a common key 816 which is incorporated in the authentication control part 504, and outputs the result of this as a comparison value 829. Meanwhile, the random number 827 is fed to the secret information processing LSI 802 from the CPU 801, a circuit 831 for one-way function processing performs one-way function processing of the random number 827 using the common key 820 stored in the secret information processing LSI 802, and the result of this is fed to the CPU 801 as a comparison value 832.

The CPU 801 executes comparison processing 830 of the comparison value 832 fed from the secret information processing LSI 802 and the comparison value 829, thereby performing authentication processing. A match between the two values means authentication of the secret information processing LSI 802 by the secret information processing software 501, which enables enable/disable information 833 and makes the CPU 801 read and execute (834) the encrypted communications control part 505 from the memory 104. A difference between the two values means failed authentication, which disables the enable/disable information 833, allows no execution of the encrypted communications control part 505 and makes the CPU 801 terminate the processing.

After the start of execution of the encrypted communications control part 834, using the common key 816, the CPU 801 performs one-way function processing 836 on the result of exclusive-OR (835) of the comparison value 818 and the comparison value 829, and the result of this is determined a session key 837.

Once the operation of the encrypted communications block 824 starts, a circuit 838 for one-way function processing performs one-way function processing on the result of exclusive-OR (839) of the comparison value 821 and the comparison value 832 using the common key 820, and the result of this is determined a session key 840. Since authentication is successful as long as the encrypted communications block 824 and the encrypted communications control part 834 are operating, the two session keys (837, 840) are the same values.

Commands of the processing command part 506 and processing data 507 in the memory 104 are read into the CPU 801 one after another, and after encoding 841 which uses the session key 837, fed to the secret information processing LSI 802. Within the secret information processing LSI 802, coded commands and coded data received at a secret information input/output terminal 842 are decoded by a encoding/decoding circuit 843 using the session key 840 and thus decoded commands and data are supplied to a secret information processing circuit 844 which is inside the secret information processing LSI 802, whereby secret information is processed.

Alternatively, output data from the secret information processing circuit 844 are encoded by the encoding/decoding circuit 843 using the session key 840 and output to the CPU 801 through the secret information input/output terminal 842, the CPU 801 performs decoding 841 using the session key 837 and accordingly realizes processing of secret information.

During such encrypted communications, a counter 845 disposed to the secret information processing LSI 802 counts the number of the communications. A comparator 847 compares the value registered in the counter 845 with a limitation value 846 stored in the secret information processing LSI 802, and when the two values match with each other, a random number re-issue signal generator circuit 850 generates random number re-issue signals 848 and 849, whereas a reset signal generator circuit 851 generates reset signals 852 and 853. The random number re-issue signal 848 is fed to the random number generating circuit 813, and as a result, the random number 815 is generated once again, while the random number re-issue signal 849 is fed to the CPU 801, and receiving this, the CPU 801 re-executes the random number generation 826. Further, the reset signal 852 resets the session key 840 within the secret information processing LSI 802. Meanwhile, the reset signal 853 is fed to the CPU 801, and receiving this, the CPU 801 resets the session key 837. At this stage, the two session keys 837 and 840 are reset to different values which have been determined in advance respectively for the secret information processing software 501 and the secret information processing LSI 802, and accordingly have different values.

Following this, the CPU 801 executes the authentication control part 504 and the secret information processing LSI 802 re-executes the operation of the authentication block 812, whereby authentication processing is performed once again and the session keys 837 and 840 are updated.

While the third embodiment requires that the common key used in the one-way function processing 817 and 819 for authentication processing, the common key used in the one-way function processing 828 and 831 similarly for authentication processing and the common key used in the one-way function processing 836 and 838 for generation of the session keys are the same, these may be common keys which are different from each other.

Further, the configuration of the authentication block 812 only needs be able to control the operation of the encrypted communications block 824: Some of the structure elements in the configuration of the authentication block 812 according to the third embodiment may be outside the authentication block or other structure elements may be included in the authentication block.

Further, the encrypted communications block 824 only needs be configured such that no encrypted communication using the same session key will take place unless the encrypted communications block 824 operates: Some of the structure elements in the configuration of the encrypted communications block 824 according to the third embodiment may be outside the encrypted communications block or other structure elements may be included in the encrypted communications block.

Further, although the third embodiment requires resetting the session keys 837 and 840 respectively to the predetermined values at the time of generation of the reset signals 852 and 853, these may be are reset respectively to different values using a random number for instance.

Further, although the exclusive-OR 835 and 839 of the comparison values are yielded for generation of the session keys in the third embodiment, other function such as sum and product which uses two inputs and yields one output may be used instead.

As described above, according to the third embodiment, tampering detection is performed through calculation of the hash value of the secret information processing software 501 while executing mutual authentication processing based on the random number 815 generated by the secret information processing LSI 802 and the random number 827 generated by the CPU 801, which prevents use of the secret information processing LSI 802 by unauthorized software. In addition, as the session keys 837 and 840 are generated based on the random numbers 815 and 827 which are used during the authentication processing and encrypted communications are realized between the LSI 802 and the CPU 801, communications of secret information between the secret information processing LSI 802 and the CPU 801 are protected.

Since the third embodiment requires generation of the random numbers by both the secret information processing LSI 802 and the CPU 801, and hence, mutual authentication, if someone should use an unauthorized secret information processing LSI in an attempt to acquire secret information held by the secret information processing software 501, authentication will fail, thus improving security.

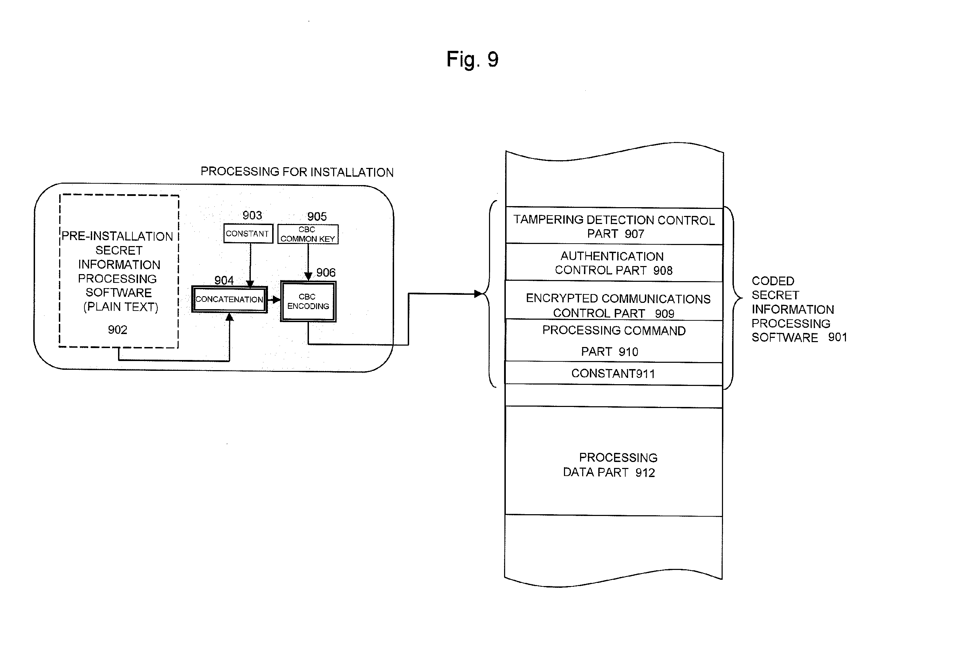

Further, since hash is utilized for tampering detection, the software to be installed need no special processing and it is thus easy to install the software. Moreover, since the session keys 837 and 840 are reset when the number of encrypted communications using the session keys 837 and 840 reaches the limitation value 846, processing to start and end the operation of the encrypted communications block 824 is not necessary at the time of resetting and it is therefore easy to control.
(Fourth Embodiment)
The structure according to the fourth embodiment is as shown in Fig. 1. Stored in coded secret information software 901 obtained by encoding secret information software which is for processing of secret information by the secret information processing LSI 105 as shown in Fig. 9. The coded secret information processing software 901 is obtained concatenating (904) a constant 903 to pre-installation secret information software 902 and CBC-encoding (906) this using a CBC common key 905. The coded secret information processing software 901, as it is encoded, includes a tampering detection control part 907, an authentication control part 908, an encrypted communications control part 909, a processing command part 910 and a constant 911.

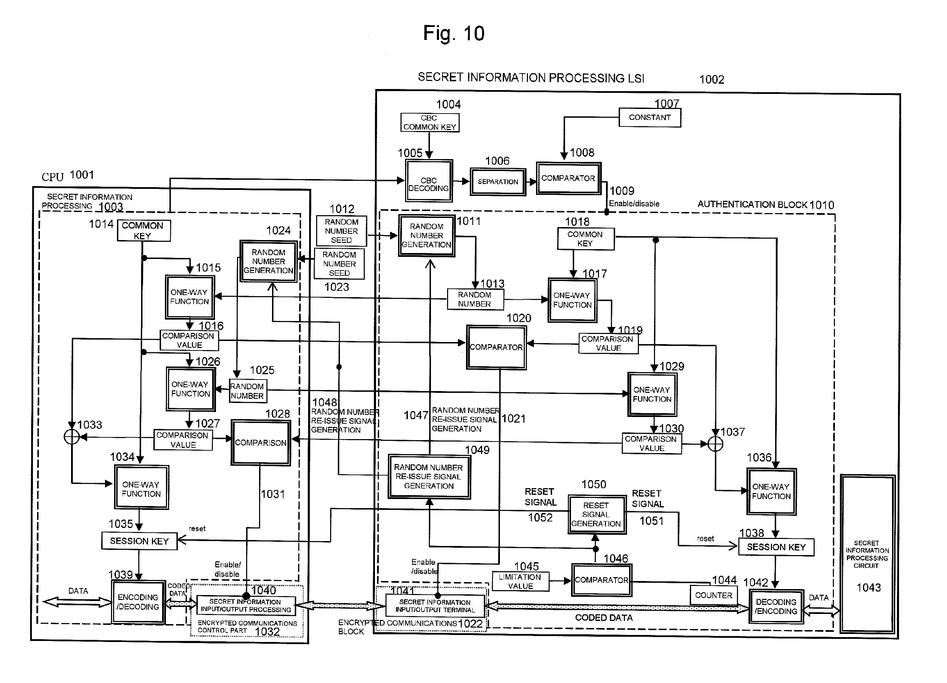

Fig. 10 shows the operation of a CPU 1001 which reads and executes the coded secret information processing software 901 and the structure and operation of a secret information processing LSI 1002: Execution of the coded secret information software 901 realizes secret information processing 1003.

At the time of execution of the coded secret information software 901, the CPU 1001 reads and executes the tampering detection control part 907 from the memory 104. The CPU 1001, executing the tampering detection control part 907, supplies the tampering detection control part 907, the authentication control part 908, the encrypted communications control part 909, the processing command part 910 and the constant 911 one after another to the secret information processing LSI 1002. In the secret information processing LSI 1002, a CBC decoding circuit 1005 decodes these inputs using a CBC common key 1004, and separates and extracts (1006) thus decoded constant part. A comparator 1008 compares the constant part extracted in this manner with a constant 1007, whereby tampering detection of the coded secret information software 901 is performed. A match between the two values means no detection of tampering, which enables an enable/disable signal 1009 and makes the secret information processing LSI 1002 start the operation of an authentication block 1010 which is contained in the secret information processing LSI 1002. A difference between the two values means detection of tampering, which disables the enable/disable signal 1009 and makes the secret information processing LSI 1002 stop the operation of the authentication block 1010.

Once the operation of the authentication block 1010 starts, a random number generating circuit 1011 receives a random number seed 1012, which is based on a noise outside the secret information processing LSI 1002, and generates a random number 1013. Thus generated random number 1013 is output to the CPU 1001. Reading the authentication control part 908 of the coded secret information software 901 from the memory 104 and using a common key 1014 incorporated in the authentication control part 908, the CPU 1001 performs one-way function processing 1015 of the random number 1013 and supplies the result of this as a comparison value 1016 to the secret information processing LSI 1002.

In the secret information processing LSI 1002, a circuit 1017 for one-way function processing performs one-way function processing 1017 of the random number 1013 using a common key 1018 stored in the secret information processing LSI 1002, and the result of this is fed to a comparator 1020 as a comparison value 1019. The comparator 1020 compares the comparison value 1016 fed from the CPU 1001 with the comparison value 1019, thereby performing authentication processing. A match between the two values means authentication of the coded secret information software 901 by the secret information processing LSI 1002, which enables an enable/disable signal 1021 and makes the secret information processing LSI 1002 start the operation of an encrypted communications block 1022 which is contained in the secret information processing LSI 1002. A difference between the two values means failed authentication, which disables the enable/disable signal 1021 and makes the secret information processing LSI 1002 stop the operation of the encrypted communications block 1022.

Finishing execution of the tampering detection control part 907, the CPU 1001 reads and executes the authentication control part 908 from the memory 104. In the authentication control part 908, random number generation 1024 is performed based on a random number seed 1023 which is based on a noise in the secret information processing apparatus 101, thereby generating a random number 1025. The CPU 1001 performs one-way function processing 1026 of the random number 1025 using a common key 1014 which is incorporated in the authentication control part 908, and the result of this is determined as a comparison value 1027.

Meanwhile, the random number 1025 is fed to the secret information processing LSI 1002 from the CPU 1001, a circuit 1029 for one-way function processing performs one-way function processing of the random number 1025 using a common key 1018 stored in the secret information processing LSI 1002, and the result of this is fed to the CPU 1001 as a comparison value 1030.

The CPU 1001 executes comparison processing 1028 of the comparison value 1030 fed from the secret information processing LSI 1002 and the comparison value 1027, thereby performing authentication processing. A match between the two values means authentication of the secret information processing LSI 1002 by the coded secret information software 901, which enables enable/disable information 1031 and makes the CPU 1001 read and execute the encrypted communications control part 909 (1032) from the memory 104. A difference between the two values means failed authentication, which disables the enable/disable information 1031, allows no execution of the encrypted communications control part 1032 and makes the CPU 1001 terminate the processing.

In addition, using the common key 1014, the CPU 1001 performs one-way function processing 1034 on the result of exclusive-OR 1033 of the comparison value 1016 and the comparison value 1027, and the result of this is determined as a session key 1035.

Meanwhile, within the secret information processing LSI 1002, a circuit 1036 for one-way function processing, using the common key 1018, performs one-way function processing on the result of exclusive-OR 1037 of the comparison value 1019 and the comparison value 1030, and the result of this is determined as a session key 1038. In the case of successful authentication, the two session keys 1035 and 1038 have the same values.

Commands of the processing command part 910 and processing data 912 in the memory 104 are read into the CPU 1001 one after another, subjected to encoding 1039 which uses the session key 1035, output after secret information input/output processing 1040, and fed to the secret information processing LSI 1002. Within the secret information processing LSI 1002, coded commands and coded data received at a secret information input/output terminal 1041 are decoded by an encoding/decoding circuit 1042 using the session key 1038 and thus decoded commands and data are supplied to a secret information processing circuit 1043 which is inside the secret information processing LSI 1002, whereby secret information is processed.

Alternatively, output data from the secret information processing circuit 1043 are encoded by the encoding/decoding circuit 1042 using the session key 1038, fed to the CPU 1001 through the secret information input/output processing 1040 and subjected to decoding 1039 using the session key 1035, and the CPU 1001 accordingly processes the secret information.

During such encrypted communications, a counter 1044 disposed to the secret information processing LSI 1002 counts the number of the communications. A comparator 1046 compares the value registered in the counter 1044 with a limitation value 1045 stored in the secret information processing LSI 1002, and when the two values match with each other, a random number re-issue signal generator circuit 1049 generates random number re-issue signals 1047 and 1048, whereas a reset signal generator circuit 1050 generates reset signals 1051 and 1052. The random number re-issue signal 1047 is fed to the random number generating circuit 1011, and as a result, the random number 1013 is generated once again, while the random number re-issue signal 1048 is fed to the CPU 1001, and receiving this, the CPU 1001 re-executes the random number generation (1024). The reset signal 1051 resets the session key 1038 which is within the secret information processing LSI 1002. Further, the reset signal 1052 is fed to the CPU 1001, and receiving this, the CPU 1001 resets the session key 1035. At this stage, the two session keys (1035, 1038) are reset to different values which have been determined in advance respectively for the coded secret information software 901 and the secret information processing LSI 1002, and accordingly have different values.

Following this, the CPU 1001 executes the authentication control part 908 and the secret information processing LSI 1002 re-executes the operation of the authentication block 1010, whereby authentication processing is performed once again and the session keys 1035 and 1038 are updated.

While the fourth embodiment requires that the common key used in the one-way function processing 1015 and 1017 for authentication processing, the common key similarly used in the one-way function processing 1026 and 1029 for authentication processing and the common key used in the one-way function processing 1034 and 1036 for generation of the session keys are the same, these may be common keys which are different from each other.

Further, although the fourth embodiment requires execution of the CBC-encoding 906 at the time of concatenating the constant 903 to the pre-installation secret information software 902 and encoding, other encoding algorithm may be used instead of CBC encoding. On the other hand, while the foregoing has described that the constant 911 is located after the processing command part 910 in the coded secret information software 901, the constant 911 may be located at other position or multiple positions.

Further, the configuration of the authentication block 1010 only needs be able to control the operation of the encrypted communications block 1022: Some of the structure elements in the configuration of the authentication block 1010 according to the fourth embodiment may be outside the authentication block or other structure elements may be included in the authentication block.

Further, the encrypted communications block 1022 only needs be configured such that no encrypted communication using the same session key will take place unless the encrypted communications block 1022 operates: Some of the structure elements in the configuration of the encrypted communications block 1022 according to the fourth embodiment may be outside the encrypted communications block or other structure elements may be included in the encrypted communications block.

Further, although the fourth embodiment requires resetting the session keys 1038 and 1035 respectively to the predetermined values at the time of generation of the reset signals 1051 and 1052, these may be are reset respectively to different values using a random number for example.

Further, although the exclusive-OR 1033 and 1037 of the comparison values are yielded for generation of the session keys in the fourth embodiment, other function such as sum and product which uses two inputs and yields one output may be used instead.

As described above, according to the fourth embodiment, tampering detection is performed by decoding the coded secret information software 901 and extracting the constant 911 while executing mutual authentication processing based on the random number 1013 generated by the secret information processing LSI 1002 and the random number 1025 generated by the CPU 1001, which prevents use of the secret information processing LSI 1002 by unauthorized software. In addition, as the session keys 1038 and 1035 are generated based on the random numbers 1013 and 1025 which are used during the authentication processing and encrypted communications are realized between the LSI 1002 and the CPU 1001, communications of secret information between the secret information processing LSI 1002 and the CPU 1001 are protected.

Since the fourth embodiment requires generation of the random numbers by both the secret information processing LSI 1002 and the CPU 1001, and hence, mutual authentication, if someone should use the unauthorized secret information processing LSI 1002 in an attempt to acquire secret information held by the secret information processing software 1001, authentication will fail, thus improving security.

In addition, it is possible for the secret information processing LSI 1002 to store in advance a value for comparison (the constant 1007) to be used at the time of tampering detection since the tampering detection utilizes encoding/decoding, and as a fewer inputs are fed to the secret information processing LSI 1002, security improves. Moreover, since the session keys 1035 and 1038 are reset when the number of encrypted communications using the session keys 1035 and 1038 reaches the limitation value 1045, processing to start and end the operation of the encrypted communications block 1022 is not necessary at the time of resetting and it is therefore easy to control.

Thus, the first embodiment, the second embodiment, the third embodiment and the fourth embodiment are as described above.

Although each embodiment requires that the limitation value 634, 736, 846 or 1045 is a value stored in advance in the secret information processing LSI, this value may be a value which is fed from outside. Further, while the foregoing has described that the random number seeds 614, 713, 814, 825, 1012 and 1023 are based on noises, these may be something else. Still further, although the foregoing has described that the bus 106 is common to the respective pieces of data, dedicated buses may be disposed for some or all of the data.

As described above, according to the present invention, leakage of secret information owing to unauthorized software execution is prevented since authentication and tampering detection is performed between the software which is for processing of secret information and the LSI which processes secret information and the LSI controls the start and the end of the operation of the circuit disposed within the LSI based on the result of this, while leakage of secret information committed by observing a bus using a probe or the like is prevented since session keys are generated from a value originating from a random number which is used for authentication and encrypted communications are established between the software and the LSI using a common key which is updated at appropriate intervals, so that the secret information processing system and the LSI are highly secure.

In the present invention, in the event of detection of tampering identified through tampering detection or failed authentication as a result of authentication processing, the secret information input/output terminal within the LSI may stop operating or the circuit which processes secret information may stop operating, whereas in the case of no detection of tampering through tampering detection or successful authentication as a result of authentication processing, the secret information input/output terminal within the LSI may start operating or the circuit which processes secret information may start operating.
[Industrial Availability]

The secret information processing system and the LSI according to the present invention attain the effect that it is possible to prevent leakage of secret information owing to unauthorized software execution or the like, and as such, are useful as a secret information processing system and an LSI which are secure.
[Explanation of the Reference Symbols]

- 101: secret information processing apparatus
- 102: CPU
- 104: memory
- 105: secret information processing LSI
- 106: bus
- 301: secret information processing LSI
- 302: software tampering detecting block
- 303: authentication block
- 304: encrypted communications block
- 305: secret information processing block
- 501: secret information processing software
- 502: coded hash value
- 503: tampering detection control part
- 504: authentication control part
- 505: encrypted communications control part
- 506: processing command part
- 507: processing data
- 601: CPU
- 602: secret information processing LSI
- 603: coded hash value
- 604: decoding circuit
- 605: secret key
- 608: hash function circuit
- 610: comparator
- 611: enable/disable signal
- 613: random number generating circuit
- 615: random number
- 616: common key
- 617: one-way function processing
- 619: circuit for one-way function processing
- 620: common key
- 622: comparator

- 623: enable/disable signal
- 624: encrypted communications block
- 625: circuit for one-way function processing
- 626: session key
- 627: one-way function processing
- 628: session key
- 629: encoding/decoding
- 631: encoding/decoding circuit
- 632: secret information processing circuit
- 637: random number re-issue signal generator circuit
- 638: reset signal generator circuit
- 701: CPU
- 702: secret information processing LSI
- 704: decoding circuit
- 708: hash function circuit
- 711: enable/disable signal
- 714: random number generation
- 717: one-way function processing
- 719: circuit for one-way function processing
- 723: enable/disable signal
- 724: enable/disable control circuit
- 725: enable/disable signal
- 726: encrypted communications block
- 728: one-way function processing
- 730: circuit for one-way function processing
- 732: encoding/decoding circuit
- 733: encoding/decoding circuit
- 740: disable signal generator circuit
- 741: disable signal
- 801: CPU
- 802: secret information processing LSI
- 804: decoding circuit
- 808: hash function circuit
- 811: enable/disable signal
- 813: random number generating circuit
- 817: one-way function processing
- 819: circuit for one-way function processing
- 823: enable/disable signal
- 824: encrypted communications block
- 826: random number generation
- 828: one-way function processing
- 830: comparison processing
- 831: circuit for one-way function processing
- 833: enable/disable signal
- 834: encrypted communications control part
- 835: exclusive-OR processing
- 836: one-way function processing
- 838: circuit for one-way function processing
- 839: exclusive-OR circuit
- 841: encoding/decoding
- 843: encoding/decoding circuit
- 850: random number re-issue signal generator circuit
- 851: reset signal generator circuit
- 901: coded secret information software
- 902: pre-installation secret information software
- 903: constant
- 904: concatenation
- 905: CBC common key
- 906: CBC-encoding
- 911: constant
- 1001: CPU
- 1002: secret information processing LSI
- 1003: secret information processing
- 1004: CBC common key
- 1005: CBC decoding circuit
- 1006: dividing circuit
- 1007: constant
- 1009: enable/disable signal
- 1011: random number generating circuit
- 1015: one-way function processing
- 1017: circuit for one-way function processing
- 1021: enable/disable signal
- 1022: encrypted communications block
- 1024: random number generating circuit
- 1026: one-way function processing
- 1028: comparison processing
- 1029: one-way function processing
- 1031: enable/disable signal
- 1032: encrypted communications control part
- 1033: exclusive-OR processing
- 1034: one-way function processing
- 1036: one-way function processing
- 1037: exclusive-OR circuit
- 1039: encoding/decoding
- 1040: secret information input/output processing
- 1041: secret information input/output terminal
- 1042: encoding/decoding circuit

## Claims

1. A secret information processing system, comprising: a memory which stores software; a CPU which reads and executes said software from said memory; and an LSI which comprises at least one of a tampering detection circuit, which detects tampering of said software, and an authentication processing circuit, which authenticates said software, and a circuit which processes secret information under the control of said software,
**characterized in that** said LSI, utilizing said tampering detection circuit or said authentication processing circuit, performs at least one processing of tampering detection and authentication of said software and determines the operation of said LSI based on the result of the processing.

2. The secret information processing system of claim 1, **characterized in that** when tampering is detected as a result of tampering detection or in the case of failed authentication as a result of authentication processing, a secret information input/output terminal inside said LSI stops operating.

3. The secret information processing system of claim 1, **characterized in that** when tampering is not detected as a result of tampering detection or in the case of successful authentication as a result of authentication processing, a secret information input/output terminal inside said LSI starts operating.

4. The secret information processing system of claim 1, **characterized in that** when tampering is detected as a result of tampering detection or in the case of failed authentication as a result of authentication processing, said circuit which processes secret information within said LSI stops operating.

5. The secret information processing system of claim 1, **characterized in that** when tampering is not detected as a result of tampering detection or in the case of successful authentication as a result of authentication processing, said circuit which processes secret information within said LSI starts operating.

6. The secret information processing system of claim 1, **characterized in that** said software has a first coded hash value which is obtained by calculating a hash value in advance before installation and encoding the result of the calculation, and
said tampering detection circuit comprises a first decoding circuit which decodes said first coded hash value using a first decoding key, a hash creating circuit which creates a first hash value of said software prior to execution of said software, and a first comparator which detects tampering of said software by means of comparison of said first hash value with a value which is obtained as said first decoding circuit decodes said first coded hash value.

7. The secret information processing system of claim 1, **characterized in that** said software concatenates a first constant at a predetermined position and is encoded using a software coding key before installation, and
said tampering detection circuit has a second constant and comprises a software decoding circuit which decodes said software using a software decoding key and extracts a first comparison value from said predetermined position, and a second comparator which detects tampering of said software by comparing said first comparison value with said second constant.

8. The secret information processing system of claim 1, **characterized in that** said authentication processing circuit comprises a first random number generating circuit which generates a first random number, a first circuit which performs first one-way function processing of said first random number using a first common key, and a third comparator,
said software has a first function of performing said first one-way function processing of said first random number using a common key, and
said third comparator authenticates said software by comparing a second comparison value which is obtained as said authentication processing circuit performs said first one-way function processing with a third comparison value which is obtained as said software performs said first one-way function processing of said first random number fed from said authentication processing circuit.

9. The secret information processing system of claim 1, **characterized in that** said authentication processing circuit comprises a second circuit which performs second one-way function processing using a second common key, and a fourth comparator,
said software has a second function of performing said second one-way function processing using a common key, and a first random number generating function of generating a second random number, and'
said fourth comparator authenticates said software by comparing a fourth comparison value, which is obtained as said software performs said second one-way function processing of said second random number generated by said first random number generating function, with a fifth comparison value which is obtained as said second circuit of said authentication processing circuit performs said second one-way function processing of said second random number fed from said software.

10. The secret information processing system of claim 1, **characterized in that** said authentication processing circuit comprises a second random number generating circuit, a third circuit which performs third one-way function processing using a third common key and a fifth comparator, and said second random number generating circuit generates a third random number,
said software has a third function of performing said third one-way function processing using a common key, a second random number generating function and a first comparing function of comparing two input values, and said second random number generating function generates a fourth random number,
said fifth comparator compares a sixth comparison value, which is the result of said third one-way function processing performed on said third random number by said third circuit of said authentication processing circuit, with a seventh comparison value which is the result of said third one-way function processing performed on said third random number by said third function of said software, and
said first comparing function compares an eighth comparison value, which is obtained as said software performs said third one-way function processing of said fourth random number, with a ninth comparison value which is obtained as a result of said third one-way function processing of said fourth random number performed by said third circuit of said authentication processing circuit, whereby said LSI and said software authenticate each other.

11. The secret information processing system of claim 1, **characterized in that** first session keys common to said LSI and said software are generated based on a random number in the event of no detection of tampering and no failed authentication, and encrypted communications are achieved using said first session keys.

12. The secret information processing system of claim 11, **characterized in that** a first counter is disposed which counts the number of communications during encrypted communications using said first session keys, a first random number re-issue signal generator circuit is disposed which generates a first random number re-issue signal which prompts generation of a new random number for every certain communications, and said first session keys can thus be updated.

13. The secret information processing system of claim 12, comprising a reset signal generator circuit which generates a first session key reset signal at the same time that said first random number re-issue signal is generated for every certain communications, to thereby reset said first session keys held by said LSI and said software respectively to different values.

14. The secret information processing system of claim 12, comprising a circuit which generates a communication circuit stop signal, which stops the operation of said secret information input/output terminal inside said LSI, at the same time that said first random number re-issue signal is generated for every certain communications.

15. The secret information processing system of claim 1, **characterized in that** said software has a first coded hash value which is obtained by calculating a hash value in advance before installation and encoding the result of the calculation,
said tampering detection circuit comprises a first decoding circuit which decodes said first coded hash value using a first decoding key, a hash creating circuit which creates a first hash value of said software prior to execution of said software, and a first comparator which detects tampering of said software by means of comparison of said first hash value with a value which is obtained as said first decoding circuit decodes said first coded hash value, and a circuit which is started and stopped operating in accordance with the result of this is said authentication processing circuit,
said authentication processing circuit comprises a second random number generating circuit, a third circuit which performs third one-way function processing using a third common key and a fifth comparator, and said second random number generating circuit generates a third random number,
in which case said software has a third function of performing said third one-way function processing using a common key, a second random number generating function and a first comparing function of comparing two input values, and said second random number generating function generates a fourth random number,
said fifth comparator compares a sixth comparison value, which is the result of said third one-way function processing performed on said third random number by said third circuit of said authentication processing circuit, with a seventh comparison value which is the result of said third one-way function processing performed on said third random number by means of said third function of said software,
said first comparing function compares an eighth comparison value, which is obtained as said software performs said third one-way function processing of said fourth random number, with a ninth comparison value which is obtained as a result of said third one-way function processing of said fourth random number performed by said third circuit of said authentication processing circuit, whereby said LSI and said software authenticate each other, and a circuit which is started and stopped operating in accordance with the result of this authentication processing is a circuit which attains encrypted communications,
said circuit which attains encrypted communications generates first session keys common to said LSI and said software based on a random number in the event of no detection of tampering and no failed authentication, and achieves encrypted communications using said first session keys,
a first counter is disposed which counts the number of communications during encrypted communications and a first random number re-issue signal generator circuit is disposed which generates a first random number re-issue signal which prompts generation of a new random number for every certain communications, which makes it possible to update said first session keys, and
a reset signal generator circuit is disposed which generates a first session key reset signal at the same time that said first random number re-issue signal is generated for every certain communications, to thereby reset said first session keys held by said LSI and said software respectively to different values.

16. An LSI comprising: at least one of a tampering detection circuit and an authentication processing circuit; and a circuit which processes secret information under the control of software which is executed by a CPU, **characterized in** making said tampering detection circuit or said authentication processing circuit perform at least one of tampering detection and authentication of said software and accordingly determining to operate or not to operate based on the result of this.

17. The LSI of claim 16 comprising a secret information input/output terminal, **characterized in that** when tampering is detected as a result of tampering detection or in the case of failed authentication as a result of authentication processing, said secret information input/output terminal stops operating.

18. The LSI of claim 16 comprising a secret information input/output terminal, **characterized in that** when tampering is not detected as a result of tampering detection or in the case of successful authentication as a result of authentication processing, said secret information input/output terminal starts operating.

19. The LSI of claim 16, **characterized in that** when tampering is detected as a result of tampering detection or in the case of failed authentication as a result of authentication processing, said circuit which processes secret information stops operating.

20. The LSI of claim 16, **characterized in that** when tampering is not detected as a result of tampering detection or in the case of successful authentication as a result of authentication processing, said circuit which processes secret information starts operating.

21. The LSI of claim 16, **characterized in that** said software has a first coded hash value which is obtained by calculating a hash value in advance before installation and encoding the result of the calculation, and
said tampering detection circuit comprises a first decoding circuit which decodes said first coded hash value using a first decoding key, a hash creating circuit which creates a first hash value of said software at the time of execution of said software, and a first comparator which detects tampering of said software by means of comparison of said first hash value with a value which is obtained as said first decoding circuit decodes said first coded hash value.

22. The LSI of claim 16, **characterized in that** said software concatenates a first constant at a predetermined position and is encoded using a software coding key before installation, and
said tampering detection circuit has a second constant and comprises a software decoding circuit which decodes said software using a software decoding key and extracts a first comparison value from said predetermined position, and a second comparator which detects tampering of said software by comparing said first comparison value with said second constant.

23. The LSI of claim 16, **characterized in that** said authentication processing circuit comprises a first random number generating circuit which generates a first random number, a first circuit which performs first one-way function processing of said first random number using a first common key, and a third comparator,
said software has a first function of performing said first one-way function processing of said first random number using a common key, and
said third comparator authenticates said software by comparing a second comparison value which is obtained as said authentication processing circuit performs said first one-way function processing with a third comparison value which is obtained as said software performs said first one-way function processing of said first random number fed from said authentication processing circuit.

24. The LSI of claim 16, **characterized in that** said authentication processing circuit comprises a second circuit which performs second one-way function processing using a second common key, and a fourth comparator,
said software has a second function of performing said second one-way function processing using a common key, and a first random number generating function of generating a second random number, and
said fourth comparator authenticates said software by comparing a fourth comparison value, which is obtained as said software performs said second one-way function processing of said second random number generated by said first random number generating function, with a fifth comparison value which is obtained as said second circuit of said authentication processing circuit performs said second one-way function processing of said second random number fed from said software.

25. The LSI of claim 16, **characterized in that** said authentication processing circuit comprises a second random number generating circuit, a third circuit which performs third one-way function processing using a third common key and a fifth comparator, and said second random number generating circuit generates a third random number,
said software has a third function of performing said third one-way function processing using a common key, a second random number generating function and a first comparing function of comparing two input values, and said second random number generating function creates a fourth random number,
said fifth comparator compares a sixth comparison value, which is the result of said third one-way function processing performed on said third random number by said third circuit of said authentication processing circuit, with a seventh comparison value which is the result of said third one-way function processing performed on said third random number by said third function of said software, and
said first comparing function compares an eighth comparison value, which is obtained as said software performs said third one-way function processing of said fourth random number, with a ninth comparison value which is obtained as a result of said third one-way function processing of said fourth random number performed by said third circuit of said authentication processing circuit, whereby said LSI and said software authenticate each other.

26. The LSI of claim 16, **characterized in that** first session keys common to said LSI and said software are generated based on a random number in the event of no detection of tampering and no failed authentication, and encrypted communications are achieved using said first session keys.

27. The LSI of claim 26, **characterized in that** a first counter is disposed which counts the number of communications during encrypted communications using said first session keys, a first random number re-issue signal generator circuit is disposed which generates a first random number re-issue signal which prompts generation of a new random number for every certain communications, and said first session keys can thus be updated.

28. The LSI of claim 27, comprising a reset signal generator circuit which generates a first session key reset signal at the same time that said first random number re-issue signal is generated for every certain communications, to thereby reset said first session keys held by said LSI and said software respectively to different values.

29. The LSI of claim 27, comprising a circuit which generates a communication circuit stop signal, which stops the operation of said secret information input/output terminal inside said LSI, at the same time that said first random number re-issue signal is generated for every certain communications.

30. The LSI of claim 16, **characterized in that** said software has a first coded hash value which is obtained by calculating a hash value in advance before installation and encoding the result of the calculation,
said tampering detection circuit comprises a first decoding circuit which decodes said first coded hash value using a first decoding key, a hash creating circuit which creates a first hash value of said software prior to execution of said software, and a first comparator which detects tampering of said software by means of comparison of said first hash value with a value which is obtained as said first decoding circuit decodes said first coded hash value, and a circuit which is started and stopped operating in accordance with the result of this is said authentication processing circuit,
said authentication processing circuit comprises a second random number generating circuit, a third circuit which performs third one-way function processing using a third common key and a fifth comparator, and said second random number generating circuit generates a third random number,
in which case said software has a third function of performing said third one-way function processing using a common key, a second random number generating function and a first comparing function of comparing two input values, and said second random number generating function generates a fourth random number,
said fifth comparator compares a sixth comparison value, which is the result of said third one-way function processing performed on said third random number by said third circuit of said authentication processing circuit, with a seventh comparison value which is the result of said third one-way function processing performed on said third random number by means of said third function of said software,
said first comparing function compares an eighth comparison value, which is obtained as said software performs said third one-way function processing of said fourth random number, with a ninth comparison value which is obtained as a result of said third one-way function processing of said fourth random number performed by said third circuit of said authentication processing circuit, whereby said LSI and said software authenticate each other, and a circuit which is started and stopped operating in accordance with the result of this authentication processing is a circuit which attains encrypted communications,
said circuit which attains encrypted communications generates first session keys common to said LSI and said software based on a random number in the event of no detection of tampering and no failed authentication, and achieves encrypted communications using said first session keys,
a first counter is disposed which counts the number of communications during encrypted communications and a first random number re-issue signal generator circuit is disposed which generates a first random number re-issue signal which prompts generation of a new random number for every certain communications, which makes it possible to update said first session keys, and
a reset signal generator circuit is disposed which generates a first session key reset signal at the same time that said first random number re-issue signal is generated for every certain communications, to thereby reset said first session keys held by said LSI and said software respectively to different values.
